# EUROPÄISCHE PATENTSCHRIFT

(11) **EP 0 999 534 B1**
(45) Veröffentlichungstag und Bekanntmachung des Hinweises auf die Patenterteilung: **28.02.2007**
(21) Anmeldenummer: 99118219.7
(22) Anmeldetag: 14.09.1999
(51) Int. Cl.: G09B 9/05

(54) **Übungssimulator**
Training simulator
Simulateur d'entraînement

(30) Priorität: 02.11.1998 DE 19850406
(43) Veröffentlichungstag der Anmeldung: 10.05.2000
(73) Patentinhaber: Rheinmetall Defence Electronics GmbH, 28309 Bremen (DE)
(72) Erfinder: Hänseroth, Ralf, 27299 Langwedel (DE); Fronzek, Harald, 27299 Langwedel (DE)
(74) Vertreter: Thul, Hermann

(56) Entgegenhaltungen:
- EP-A- 0 709 815
- DE-A1- 3 925 427
- JP-A- 8 248 872
- JP-A- 9 101 738
- US-A- 5 582 518

## Beschreibung

Die Erfindung betrifft einen Übungssimulator zum Trainieren von Personen in der Führung von Fahrzeugen, insbesondere von Nutzfahrzeugen, der im Oberbegriff des Patentanspruchs 1 angegebenen Gattung.

Bei einem bekannten Übungssimulator für Lastkraftwagen der eingangs genannten Art, auch Fahrsimulator genannt (DE 39 25 427 A1) ist der Projektionsschirm aus ebenen Einzelflächen zusammengesetzt, die längs eines die Fahrerkabine von vorn umfassenden Polygonzugs lückenlos aneinander anschließen. Die Einzelflächen werden mittels eines Gestells gehalten, das aus einem vertikalen Haltemast und einer auf dem Boden horizontal gelagerten Führungsschiene besteht. Die Bildprojektoren, die jeweils eine Einzelfläche des Projektionsschirms beleuchten, sind in zwei Gruppen aufgeteilt. Die Bildprojektoren für die mittleren Einzelflächen sind in scheinbarer Fahrtrichtung gesehen hinter dem Projektionsschirm angeordnet. Die von diesen Projektoren ausgehenden Lichtbündel treffen durch in den Einzelflächen angeordneten Durchtrittsöffnungen auf den Durchtrittsöffnungen zugeordnete Umlenkspiegel und fallen auf den Projektionsschirm vor der Fahrerkabine. Die Bildprojektoren für die weiter außen liegenden Einzelflächen sind oberhalb der Fahrerkabine angeordnet und ihre Lichtbündel fallen über auf dem Dach der Fahrerkabine befestigte Umlenkspiegel auf den Projektionsschirm. Diese Auflichtprojektion hat den Nachteil, daß bei Verwendung einer üblicherweise geforderten, originalen Fahrerkabine und der Anpassung der simulierten Umwelt an das Sichtfeld des Fahrers wegen den großen Abmessungen der Fahrerkabine und den extremen Abmessungen des Sichtfeldes eine schattenwurffreie Projektion nur dann erreicht werden kann, wenn der Projektionsschirm weit von der Fahrerkabine entfernt ist und die Projektoren hoch über der Fahrerkabine angeordnet werden. Dies bedingt große Abmessungen des Fahrsimulators, was einerseits hohe Gebäude zu dessen Unterbringung erfordert und andererseits auch die Unterbringung des Simulators auf einem Bewegungssystem, z.B. zur Beschleunigungssimulation, erheblich erschwert.

Bei einem ebenfalls bekannten Fahrsimulator dieser Art (EP 0 709 815 B1) sind für die Darstellung der simulierten Umwelt drei Großbildprojektoren vorgesehen, die mittels Durchlichtprojektion Abschnitte des sichtbaren Panoramas auf jeweils einem von drei trapezförmig vor der Fahrerkabine aufgestellten, transparenten Projektionsschirmen darstellen. Die Großbildprojektoren sind auf der von der Fahrerkabine abgewandten Rückseite der Projektionsschirme angeordnet und jeder Großbildprojektor projiziert über einen Umlenkspiegel einen Sektor eines sich über 180° erstreckenden Panoramas auf die Rückseite des Projektionsschirms.

Dieses sog. Durchlicht- oder Rückprojektion hat den Vorteil, daß die Lichtwege für die Bilderzeugung und die Bildwahrnehmung strikt getrennt sind und dadurch der Projektionsschirm näher an die Fahrerkabine herangeführt werden kann, was zu kleineren Abmessungen des Simulators und zu helleren Bildern führt. Nachteilig ist, daß die Projektionsschirme relativ instabil sind und sich ebenfalls nicht zur Montage auf einem Bewegungssystem eignen.

Der Erfindung liegt die Aufgabe zugrunde, einen Übungssimulator der eingangs genannten Art mit geringer Bauhöhe und geringer Baubreite zu schaffen, bei dem ohne nennenswerte konstruktive Änderungen an die Fahrzeugart angepaßte unterschiedliche Sichtfelder auf dem Projektionsschirm entworfen werden können und das Bilddarstellungssystem eine hohe mechanische Stabilität aufweist, so daß der Simulator, z.B. zur Beschleunigungssimulation, auch auf einem Bewegungssystem installiert werden kann.

Die Aufgabe ist erfindungsgemäß durch die Merkmale im Kennzeichenteil des Anspruchs 1 gelöst.

Der erfindungsgemäße Übungssimulator hat den Vorteil, daß durch die einstückige, durch Einspannen in den Halterungen zylindrisch gekrümmte, transparente Kunststoff-Durchlichtscheibe der Projektionsschirm eine hohe Stabilität besitzt, die selbst den Anforderungen bei Installation auf einen Bewegungssystem genügt. Durch die Beibehaltung der Durchlichtprojektion ist die strikte Trennung der Lichtwege für die Bilderzeugung und -wahrnehmung gegeben, so daß einerseits die Durchlichtscheibe relativ nahe vor der Fahrerkabine angeordnet werden kann und andererseits die Bildprojektoren nahe dem Boden angeordnet werden können und dadurch insgesamt kleine Abmessungen für den Übungssimulator erzielbar sind. Durch einfaches Verändern des Abstandes der Durchlichtscheibe von den Bildprojektoren läßt sich das Sichtfeld in dem erforderlichen Umfang an das für das jeweilige Übungsfahrzeug geforderte Sichtfeld anpassen. Die Durchlichtscheibe stellt keine besondere Anforderung an Herstellung und Transport, da sie eben ist und erst bei ihrer Montage gekrümmt wird. Die Montage ist einfach und wenig zeitaufwendig, da sie nur in die auf einem Kreisbogen angeordneten Halterungen eingesetzt werden muß, welche die Durchlichtscheibe an deren oberem und unterem Rand einspannen.

Zweckmäßige Ausführungsformen des erfindungsgemäßen Übungssimulators mit vorteilhaften Weiterbildungen und Ausgestaltungen der Erfindung ergeben sich aus den weiteren Ansprüchen.

Gemäß einer vorteilhaften Ausführungsform der Erfindung ist jede Halterung an einem Montagemodul ausgebildet, und die Module sind kreissegmentförmig so ausgebildet, daß sie zur Bildung eines teil- oder vollgeschlossenen Zylinders aneinander reihbar und miteinander fest verbindbar sind. Diese Modulbauweise bietet die Möglichkeit, durch einfaches Hinzufügen oder Wegnehmen von Modulen den Projektionsschirm in Horizontalrichtung an das für den speziellen Simulator geforderte Sichtfeld anzupassen. Die Größe der Durchlichtscheibe in Horizontalrichtung muß dabei jeweils dem Sichtfeld entsprechend bemessen werden, was durch Austausch von Durchlichtscheiben erfolgt. Die Module werden bevorzugt so ausgeführt, daß jedes Modul ein Kreissegment von 30° abdeckt, wobei sich die Module über die gesamte vertikale Höhe der Durchlichtscheibe erstrecken und die Halterung an jedem Modul die Durchlichtscheibe an deren oberem und unterem Rand einspannt. Die Module sind dabei so konstruiert, daß sie sowohl alleinstehend als auch auf einem Bewegungssystem montiert werden können.

Gemäß einer bevorzugten Ausführungsform der Erfindung ist in jedem Modul ein Bildprojektor und ein Umlenkspiegel zur Faltung des von dem Projektor ausgehenden Projektionsstrahls angeordnet, wobei Bildprojektor und Umlenkspiegel so ausgerichtet sind, daß ein längs der Projektorachse einfallender Strahl vom Umlenkspiegel so reflektiert wird, daß er rechtwinklig auf die Durchlichtscheibe auftrifft. Jeder Bildprojektor leuchtet dabei ein Feld von 33° in Horizontalrichtung auf der Durchlichtscheibe aus, um bei einer Segmentbreite von 30° ein sog. Edge Blending, d. h. einen allmählichen Übergang von einem zum anderen Feld, zu erhalten. Mit horizontaler Vergrößerung oder Verkleinerung der Durchlichtscheibe wird damit gleichzeitig die Zahl der erforderlichen Projektoren automatisch angepaßt. Da der Projektionsstrahl senkrecht auf die Durchlichtscheibe trifft, sind keinerlei Trapezkorrekturen erforderlich.

Gemäß einer vorteilhaften Ausführungsform der Erfindung ist die Halterung der Durchlichtscheibe an jedem Modul radial verstellbar ausgebildet, wobei jede Halterung bevorzugt durch oben und unten an das Modul ansetzbare, jeweils eine Aufnahme für die Durchlichtscheibe tragende Adapter unterschiedlicher Länge in Radialrichtung stufenweise verlängerbar ist. Mittels der Adapter kann der Zylinderradius der Durchlichtscheibe entsprechend der gewählten Länge der Adapter verringert werden, wodurch sich das vertikale Sichtfeld für den Fahrer in der Fahrerkabine erhöht. Die Verringerung des Zylinderradius liefert gleichzeitig den zusätzlich erforderlichen Projektionsabstand, so daß der Außendurchmesser des Bilddarstellungssystems konstant bleibt.

Aufgrund der Modulbauweise kann für den Einsatz von großen Übungsfahrzeugen auch ein größerer Zylinderradius realisiert werden, indem die Module auseinandergezogen und über in die entstehenden Zwischenräumen eingebrachte Adapter aneinander befestigt werden. Die Module bleiben unverändert, allerdings erhöht sich der Außendurchmesser des Bilddarstellungssystems.

Gemäß einer vorteilhaften Ausführungsform der Erfindung sind die Bildprojektoren mit einem Weitwinkelobjektiv ausgestattet, das ein Verhältnis der langen Bildseite zum Projektionsabstand von 1:1,2 oder größer liefert. Damit kann der durch die Umlenkspiegel bereits kurze Projektionsabstand zwischen Bildprojektor und Projektionsschirm weiter verkürzt werden, was sich vorteilhaft auf den Außendurchmesser des Bilddarstellungssystems auswirkt.

Gemäß einer vorteilhaften Ausführungsform der Erfindung sind die Bildröhren jedes Bildprojektors so gedreht, daß bei horizontaler Projektorlage ein vertikal aufgerichtetes Bild projiziert wird. Damit erhält man eine recht flache Bauweise der Bildprojektoren, so daß möglichst viel freier Raum in dem Bereich, in dem die Lichtstrahlen verlaufen, erhalten wird.

Aus gleichem Grund weist auch jeder Bildprojektor ein die Bildröhren enthaltendes Gehäuse und ein die Elektronik enthaltendes Gehäuse auf, wobei das Elektronikgehäuse außerhalb des von der Durchlichtscheibe und dem Umlenkspiegel begrenzten Raums angeordnet ist.

Gemäß einer vorteilhaften Ausführungsform der Erfindung nehmen die kreisförmig angeordneten Module an ihrer Oberkante eine Abdeckung auf, die den zwischen den Modulen verbleibenden Raum überspannt. Damit wird eine Kapselung des gesamten Übungssimulators erreicht, so daß es nicht erforderlich ist, den Aufstellungsraum des Übungssimulators abzudunkeln.

Die Erfindung ist anhand eines in der Zeichnung dargestellten Ausführungsbeispiels im folgenden näher beschrieben. Es zeigen jeweils in schematischer Darstellung:
- Fig. 1: eine perspektivische Ansicht eines Übungssimulators zum Trainieren von Fahrern von Nutzfahrzeugen, kurz Fahrsimulator genannt,
- Fig. 2: einen Querschnitt des Fahrsimulators in Figur 1,
- Fig. 3: eine perspektivische Ansicht eines Moduls des Fahrsimulators in Fig. 1 und 2,
- Fig. 4: eine Seitenansicht des Moduls in Fig. 3 mit angesetzten Adaptern zur Veränderung des Zylinderradius des Projektionsschirms.

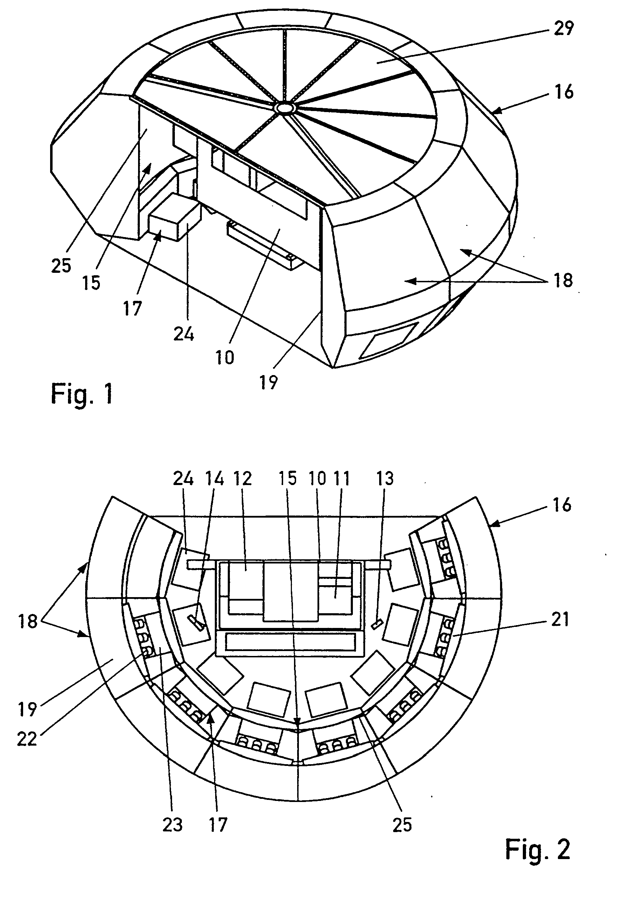

Der in Fig. 1 in perspektivischer Darstellung und in Fig. 2 im Schnitt zu sehende Übungssimulator zum Trainieren von Lastkraftwagenfahrern in der Führung von Lastkraftwagen, als Ausführungsbeispiel für einen allgemeinen Übungssimulator zum Trainieren von Personen in der Führung beliebiger Fahrzeuge, weist eine Fahrerkabine 10 auf, die im Falle des Lastkraftwagensimulators einem originalen Fahrerhaus eines Lastkraftwagens nachgebildet ist. In Fig. 2 sind in der Fahrerkabine 10 der Fahrer- und Beifahrersitz mit 11 und 12 und die beiden äußeren Rückblickspiegel mit 13 und 14 bezeichnet. Vor der Fahrerkabine 10 ist ein Projektionsschirm 15 eines Bilddarstellungssystems 16 aufgestellt, auf dem eine von der Fahrerkabine 10 aus sichtbare simulierte Umwelt dargestellt wird. Wie bekannt ist die auf dem Projektionsschirm 15 sichtbare simulierte Umwelt aus einer Mehrzahl von Einzelbildern zusammengesetzt, die von einer Mehrzahl von Bildprojektoren 17 in einer sog. Durchlicht- oder Rückprojektion auf die Rückseite des Projektionsschirm 15 projiziert werden.

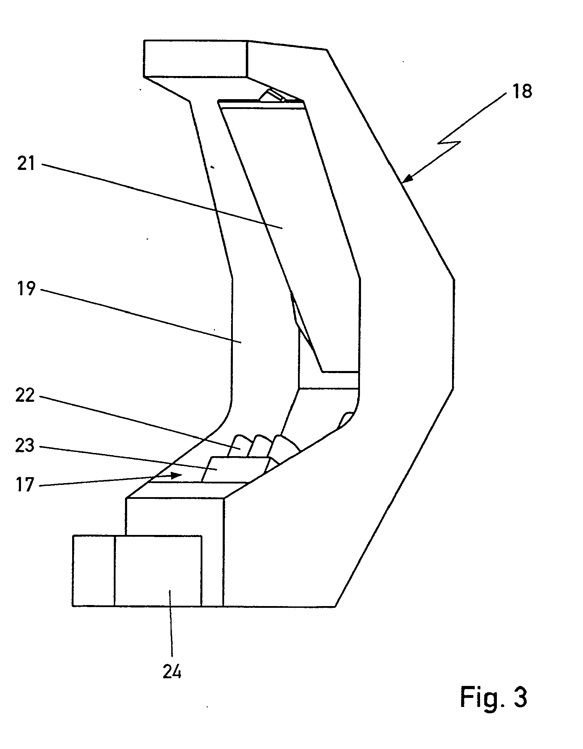

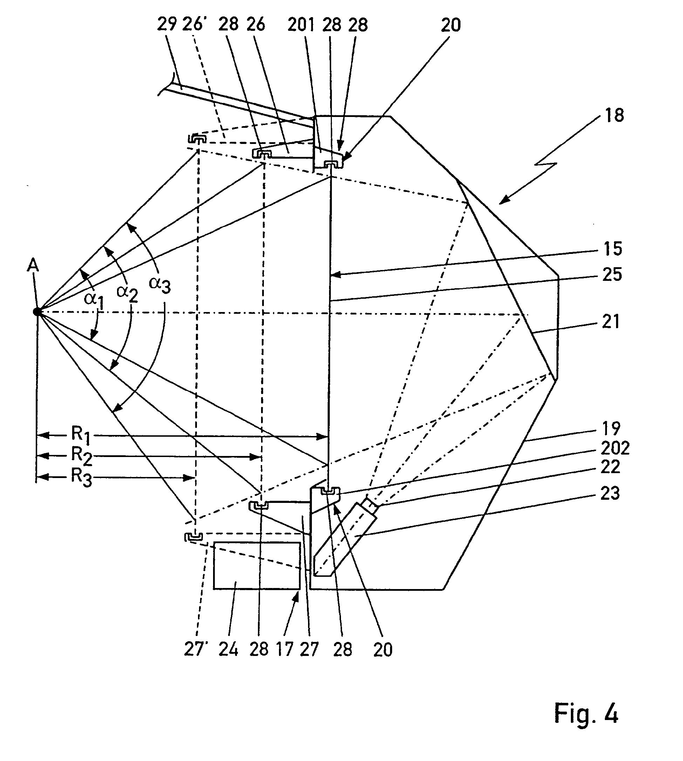

Das um die Fahrerkabine 10 herum angeordnete Bilddarstellungssystem 16 umfaßt weiterhin eine Mehrzahl von einzelnen Montagemodulen 18, die kreissegmentförmig so ausgebildet sind, daß sie zur Bildung eines teilgeschlossenen Zylinders aneinanderreihbar sind und fest miteinander verbunden werden. Die Bildung eines vollgeschlossenen Zylinders zur Darstellung einer Rundumsicht ist möglich. Im Ausführungsbeispiel ist das Bilddarstellungssystem 16 aus insgesamt acht Modulen 18 zusammengesetzt, die jeweils ein Kreissegment von 30° abdecken, so daß sich das Bilddarstellungssystem 16 insgesamt über 240° horizontal um die Fahrerkabine 10 herum erstreckt. Ein Modul 18 ist in Fig. 3 in perspektivischer Ansicht und in Fig. 4 im Längsschnitt jeweils schematisch dargestellt. Jedes Modul 18 weist ein kastenförmiges Modulgehäuse 19 auf, das eine Halterung 20 für den Projektionsschirm 15, einen im Fußbereich angeordneten Bildprojektor 17 und einen Umlenkspiegel 21 enthält, der den Projektionsstrahl des Bildprojektors 17 faltet. Bildprojektor 17 und Umlenkspiegel 21 sind innerhalb des Modulgehäuses 19 so angeordnet, daß ein längs der Projektorachse einfallender Projektionsstrahl vom Umlenkspiegel 21 so reflektiert wird, daß er rechtwinklig auf den Projektionsschirm 15 auftrifft. Jeder Bildprojektor 17 weist ein drei Farb-Bildröhren 22 enthaltendes Gehäuse 23 und ein die Elektronik enthaltendes Gehäuse 24 auf, das zur Erzielung eines möglichst großen Freiraums für die Projektionsstrahlen zwischen den Bildröhren-Gehäuse 23 und dem Projektionsschirm 15 vor dem Modul 18 angeordnet ist. Um eine möglichst flache Bauweise des die Bildröhren 22 aufnehmenden Gehäuses 23 zu erreichen, sind die Bildröhren 22 so gedreht, daß bei waagerechter Lage des Gehäuses 23 ein senkrecht stehendes Bild projiziert wird. Zur Verkürzung des Projektionsabstands sind die Bildprojektoren 17 mit einem Weitwinkelobjektiv ausgestattet, das ein Verhältnis der langen Bildbreite zum Projektionsabstand von 1:1,2 oder größer liefert.

Als Projektionsschirm 15 wird eine einstückige, ebene Durchlichtscheibe 25 aus transparentem Kunststoff verwendet, die in die Halterungen 20 in den einzelnen Modulen 18 eingespannt und dadurch zylindrisch gekrümmt wird. Hierzu besteht jede Halterung 20 aus einem oberen und unteren Haltering 201 und 202, (Fig. 4), der mit jeweils einer Aufnahme 28 die Durchlichtscheibe 25 an deren oberem und unterem Scheibenrand übergreifen. Außerdem nehmen die Module 18 an ihrer Oberkante eine Abdeckung 29 (Fig. 1) auf, die so ausgebildet ist, daß sie den zwischen den Modulen 18 verbleibenden Innenraum überspannt. Damit ist eine Gesamtkapselung des Übungssimulators gegeben, so daß bei Betrieb des Übungssimulators der Aufstellraum nicht abgedunkelt werden muß.

Die Modulbauweise des Bilddarstellungssystems 16 ermöglicht es, den Übungssimulator für verschiedene Fahrzeugarten, z. B. Lastkraftwagen, Straßenbahnen, Lokomotiven, Triebwagen etc., zu verwenden und dabei in einfacher Weise das Bilddarstellungssystem 16 an das bei dem jeweiligen Fahrzeug geforderte Sichtfeld aus dem Fahrerstand heraus anzupassen. So ist z. B. für einen Lastkraftwagen ein Sichtfeld von vertikal 30° nach unten und 10° nach oben gefordert sowie horizontal 120° nach links und 90° nach rechts. Für eine Straßenbahn dagegen muß ein Sichtfeld einen Sichtwinkel von vertikal jeweils 27° nach oben und unten und einen Sichtwinkel in der Horizontalen von ca. 105° nach rechts und links aufweisen. Das horizontale Sichtfeld läßt sich durch Hinzufügen oder Wegnehmen eines oder mehrerer Module 18 vergrößern oder verringern, wobei die transparente Durchlichtscheibe 25 durch eine längere oder kürzere Scheibe ersetzt werden muß. Das vertikale Sichtfeld läßt sich vergrößern, indem der Zylinderradius der Durchlichtscheibe 25 verkleinert wird. Dies wird - wie in Fig. 4 illustriert ist - dadurch erreicht, daß die Halterungen 20 an den Modulen 18 in Radialrichtung stufenweise verstellbar ausgebildet sind. Im Ausführungsbeispiel sind hierzu an das Modul 18 ansetzbare obere und untere Adapter 26, 27 bzw. 26', 27' vorgesehen, die gleiche Aufnahmen 28 für den oberen und unteren Scheibenrand aufweisen wie die Halteringe 201 und 202 am Modulgehäuse 19. Zum Verkleinern des Zylinderradius der Durchlichtscheibe 25 werden diese Adapter 26, 27 bzw. 26', 27' oben und unten an dem Modulgehäuse 19 befestigt, und die Durchlichtscheibe 25 wird in die Aufnahmen 28 eingesetzt. In Fig. 4 sind mit den α₁, α₂ und α₃ die Vertikalwinkel der verschiedenen Sichtfelder bezeichnet, die auf der Durchlichtscheibe 25 bei einem Zylinderradius R₁, R₂ und R₃ der Durchlichtscheibe 25 dargestellt werden.

Wenn in einem speziellen Anwendungsfall eine Vergrößerung des Zylinderradius der Durchlichtscheibe 25 gewünscht wird, um beispielsweise ein großes Übungsfahrzeug einzusetzen, so ist dies ebenfalls möglich. Hierzu werden die Module 18 auf einem Kreisbogen mit größerem Radius angeordnet, indem sie von einander abgezogen werden und in den zwischen ihnen entstehenden Lücken hier nicht dargestellte Adapterstücke eingesetzt werden, die die benachbarten Module 18 fest miteinander verbinden. Dadurch vergrößert sich allerdings auch der Außendurchmesser des gesamten Übungssimulators.

## Patentansprüche

1. Übungssimulator zum Trainieren von Personen in der Führung von Fahrzeugen, insbesondere von Nutzfahrzeugen, mit einer Fahrerkabine (10) und mit einem Bilddarstellungssystem (16) zur Erzeugung einer von der Fahrerkabine (10) aus sichtbaren, simulierten Umwelt, das einen vor der Fahrerkabine (10) aufgestellten Projektionsschirm (15) und mehrere Bildprojektoren (17) zur Projektion von die simulierte Umwelt zusammensetzenden Bildern auf die von der Fahrerkabine (10) abgekehrte Rückseite des Projektionsschirms (15) aufweist, **dadurch gekennzeichnet, daß** der Projektionsschirm (15) eine einstückige, ebene Durchlichtscheibe (25) aus transparentem Kunststoff ist, die mittels auf einem Kreisbogen festgelegter Halterungen (20) zylindrisch gekrümmt ist.

2. Simulator nach Anspruch 1, **dadurch gekennzeichnet, daß** jede Halterung (20) an einem Montagemodul (18) ausgebildet ist und daß die Module (18) kreissegmentförmig so ausgebildet sind, daß sie zur Bildung eines teil- oder vollgeschlossenen Zylinders aneinander reihbar und miteinander fest verbindbar sind.

3. Simulator nach Anspruch 2, **dadurch gekennzeichnet, daß** das Modul (18) sich über die gesamte vertikale Höhe der Durchlichtscheibe (25) erstreckt und die Halterungen (20) die Durchlichtscheibe (25) längs deren oberen und unteren Scheibenrand einspannen.

4. Simulator nach Anspruch 3, **dadurch gekennzeichnet, daß** jede Halterung (20) eines Moduls (18) zwei die Durchlichtscheibe (25) an deren oberem und unterem Scheibenrand übergreifende Halteringe (201, 202) aufweist.

5. Simulator nach einem der Ansprüche 2 bis 4, **dadurch gekennzeichnet, daß** jedes Modul (18) ein Kreissegment von 30° abdeckt.

6. Simulator nach einem der Ansprüche 2 bis 5, **dadurch gekennzeichnet, daß** die Halterung (20) für die Durchlichtscheibe (25) an jedem Modul (18) radial, vorzugsweise in Stufen verstellbar, ausgebildet ist.

7. Simulator nach Anspruch 6, **dadurch gekennzeichnet, daß** jede Halterung (20) durch oben und unten an das Modul (18) ansetzbare, jeweils eine Aufnahme (28) für die Durchlichtscheibe (25) aufweisende Adapter (26, 27; 26', 27') unterschiedlicher Länge in Radialrichtung stufenweise verlängerbar ist.

8. Simulator nach einem der Ansprüche 1 bis 7, **dadurch gekennzeichnet, daß** in jedem Modul (18) ein Bildprojektor (17) und ein Umlenkspiegel (21) zur Faltung des von dem Bildprojektor (17) ausgehenden Projektionsstrahls angeordnet ist und daß Bildprojektor (17) und Umlenkspiegel (21) so ausgerichtet sind, daß ein längs der Projektorachse einfallender Projektionsstrahl vom Umlenkspiegel (21) so reflektiert wird, daß er rechtwinklig auf die Durchlichtscheibe (25) auftrifft.

9. Simulator nach einem der Ansprüche 1 bis 8, **dadurch gekennzeichnet, daß** die Bildprojektoren (17) mit einem Weitwinkelobjektiv ausgestattet sind, das ein Verhältnis der langen Bildseite zum Projektionsabstand von 1:1,2 liefert.

10. Simulator nach Anspruch 8 oder 9, **dadurch gekennzeichnet, daß** die Bildröhren (22) der Bildprojektoren (17) so gedreht sind, daß bei horizontaler Projektorlage ein vertikal aufgerichtetes Bild projiziert wird.

11. Simulator nach einem der Ansprüche 1 bis 10, **dadurch gekennzeichnet, daß** jeder Bildprojektor (17) ein die Bildröhren (22) enthaltendes Gehäuse (23) und ein die Elektronik enthaltendes Gehäuse (24) aufweist und daß das Elektronikgehäuse (24) außerhalb des im Modul (18) von der Durchlichtscheibe (25) und dem Umlenkspiegel (21) begrenzten Raums angeordnet ist.

12. Simulator nach einem der Ansprüche 2 bis 11, **dadurch gekennzeichnet, daß** die kreisförmig aneinandergereihten Module (18) an ihrer Oberkannte eine Abdeckung (29) aufnehmen, die den von den Modulen (18) umgrenzten Innenraum überspannt.

## Claims

1. Practice simulator for the training of personnel in the driving of vehicles, in particular goods vehicles, having a driver's cab (10) and having an image display system (16) for production of a simulated surrounding world which can be seen from the driver's cab (10) and has a projection screen (15), which is positioned in front of the driver's cab (10), and a plurality of image projectors (17) for projection of images which have been collated from the simulated surrounding world onto the rear face of the projection screen (15) facing away from the driver's cab (10), **characterized in that** the projection screen (15) is an integral, planar translucent sheet (25) of transparent plastic, which is cylindrically curved by means of holders (20) which are fixed on a circular arc.

2. Simulator according to Claim 1, **characterized in that** each holder (20) is formed on a mounting module (18), and **in that** the modules (18) are in the form of circular segments such that they are arranged in row adjacent to one another, and can be firmly connected to one another, in order to form a partially closed or fully closed cylinder.

3. Simulator according to Claim 2, **characterized in that** the module (18) extends over the entire vertical height of the translucent sheet (25), and the holders (20) clamp in the translucent sheet (25) along its upper and lower sheet edge.

4. Simulator according to Claim 3, **characterized in that** each holder (20) of a module (18) has two holding rings (201, 202) which clasp the translucent sheet (25) at its upper and lower sheet edge.

5. Simulator according to one of Claims 2 to 4, **characterized in that** each module (18) covers a circular segment of 30°.

6. Simulator according to one of Claims 2 to 5, **characterized in that** the holder (20) for the translucent sheet (25) is designed to be movable radially, preferably in steps, on each module (18).

7. Simulator according to Claim 6, **characterized in that** each holder (20) can be lengthened in steps in the radial direction by means of adapters (26, 27; 26', 27') of different length which can be fitted to the module (18) at the top and bottom and each have a receptacle (28) for the translucent sheet (25).

8. Simulator according to one of Claims 1 to 7, **characterized in that** an image projector (17) and a deflection mirror (21) for folding of the projection beam emerging from the image projector (17) are arranged in each module (18), and **in that** the image projector (17) and the deflection mirror (21) are aligned such that a projection beam which is incident along the projector axis is reflected by the deflection mirror (21) such that it strikes the translucent sheet (25) at right angles.

9. Simulator according to one of Claims 1 to 8, **characterized in that** the image projectors (17) are equipped with a wide-angle lens, which results in a ratio of 1:1.2 between the long image side and the projection distance.

10. Simulator according to Claim 8 or 9, **characterized in that** the picture tubes (22) of the image projectors (17) are rotated such that a horizontal projector position results in a vertically erect image being projected.

11. Simulator according to one of Claims 1 to 10, **characterized in that** each image projector (17) has a housing (23) which contains the picture tubes (22) and a housing (24) which contains the electronics, and **in that** the electronics housing (24) is arranged outside the area which is bounded by the translucent sheet (25) and the deflection mirror (21) in the module (18).

12. Simulator according to one of Claims 2 to 11, **characterized in that** the modules (18), which are arranged in rows adjacent to one another in a circular shape, hold a cover (29) at their upper edge, which cover (29) covers the internal area that is bounded by the modules (18).

## Revendications

1. Simulateur d'entraînement pour former des personnes à la conduite de véhicules, en particulier de véhicules utilitaires, avec une cabine de conduite (10) et avec un système de visualisation (16) pour produire un environnement simulé visible depuis la cabine de conduite (10), système qui présente un écran de projection (15) installé devant la cabine de conduite (10) et plusieurs projecteurs d'images (17) pour projeter des images composant l'environnement simulé sur le côté arrière, opposé à la cabine de conduite (10), de l'écran de projection (15), **caractérisé en ce que** l'écran de projection (15) est une vitre (25) à éclairage par transmission, plane et d'un seul tenant, en matière plastique transparente, qui est courbée cylindriquement au moyen de supports (20) fixés en position en arc de cercle.

2. Simulateur selon la revendication 1, **caractérisé en ce que** chaque support (20) est formé sur un module de montage (18), et **en ce que** les modules (18) sont réalisés en forme de segments de cercle de telle sorte qu'ils peuvent être juxtaposés pour former un cylindre partiellement ou totalement fermé, et fixement reliés entre eux.

3. Simulateur selon la revendication 2, **caractérisé en ce que** le module (18) s'étend sur toute la hauteur verticale de la vitre (25) à éclairage par transmission et les supports (20) enserrent la vitre (25) à éclairage par transmission le long de son bord supérieur et de son bord inférieur.

4. Simulateur selon la revendication 3, **caractérisé en ce que** chaque support (20) d'un module (18) présente deux bagues de support (201, 202) qui engagent en recouvrement la vitre (25) à éclairage par transmission sur son bord supérieur et son bord inférieur.

5. Simulateur selon l'une quelconque des revendications 2 à 4, **caractérisé en ce que** chaque module (18) couvre un segment de cercle de 30°.

6. Simulateur selon l'une quelconque des revendications 2 à 5, **caractérisé en ce que** le support (20) pour la vitre (25) à éclairage par transmission est réalisé avec possibilité de réglage radial sur chaque module (18), de préférence graduellement.

7. Simulateur selon la revendication 6, **caractérisé en ce que** chaque support (20) peut être prolongé graduellement en direction radiale par des adaptateurs (26, 27 ; 26', 27') de longueurs différentes pouvant être rapportés en haut et en bas sur le module (18) et présentant chacun une partie réceptrice (28) pour la vitre (25) à éclairage par transmission.

8. Simulateur selon l'une quelconque des revendications 1 à 7, **caractérisé en ce qu'**un projecteur d'images (17) et un miroir de renvoi (21) pour renvoyer le faisceau de projection provenant du projecteur d'images (17) sont disposés dans chaque module (18), et **en ce que** le projecteur d'images (17) et le miroir de renvoi (21) sont orientés de telle sorte qu'un faisceau de projection incident le long de l'axe du projecteur est réfléchi par le miroir de renvoi (21) de telle sorte qu'il atteint perpendiculairement la vitre (25) à éclairage par transmission.

9. Simulateur selon l'une quelconque des revendications 1 à 8, **caractérisé en ce que** les projecteurs d'images (17) sont équipés d'un objectif grand-angulaire qui fournit un rapport de 1:1,2 entre le grand côté de l'image et la distance de projection.

10. Simulateur selon la revendication 8 ou 9, **caractérisé en ce que** les tubes images (22) des projecteurs d'images (17) sont tournés de telle sorte qu'une image redressée verticalement est projetée lorsque le projecteur est en position horizontale.

11. Simulateur selon l'une quelconque des revendications 1 à 10, **caractérisé en ce que** chaque projecteur d'images (17) présente un boîtier (23) contenant les tubes images (22) et un boîtier (24) contenant l'équipement électronique (23), et **en ce que** le boîtier électronique (24) est disposé en dehors de l'espace délimité dans le module (18) par la vitre (25) à éclairage par transmission et le miroir de renvoi (21).

12. Simulateur selon l'une quelconque des revendications 2 à 11, **caractérisé en ce que** les modules (18) juxtaposés circulairement reçoivent sur leur bord supérieur un élément de recouvrement (29) qui couvre l'espace intérieur circonscrit par les modules (18).
